Europäisches Patentamt

European Patent Office

Office européen des brevets

(11) Publication number: **0 225 785**
**A2**

# (12) EUROPEAN PATENT APPLICATION

(21) Application number: **86309446.2**

(22) Date of filing: **04.12.86**

(51) Int. Cl.⁴: **C 01 B 13/32**
**C 01 B 33/158, C 01 G 23/053**

(30) Priority: **06.12.85 US 805652**

(43) Date of publication of application:
**16.06.87 Bulletin 87/25**

(84) Designated Contracting States:
**BE DE FR GB IT NL**

(71) Applicant: **STAUFFER CHEMICAL COMPANY**
**Westport Connecticut 06881 (US)**

(72) Inventor: **Iacobucci, Paul Albert**
**6 Bronxville Glen Drive**
**Yonkers New York 10708 (US)**

(74) Representative: **Froud, Clive et al**
**Elkington and Fife High Holborn House 52/54 High**
**Holborn**
**London WC1V 6SH (GB)**

(54) Preparation of mono-disperse metal oxides.

(57) A process for the preparation of a mono-disperse metal oxide material characterised in that it comprises hydrolysing an alkoxide in the presence of a solvent at a temperature and pH necessary to produce a sol and super-critically treating the sol with an extraction fluid and adequate agitation to produce a mono-disperse metal oxide is disclosed.

The present invention provides advantages over the prior art.

EP 0 225 785 A2

**Description**

## PREPARATION OF MONO-DISPERSE METAL OXIDES

The invention pertains to the preparation of mono-disperse metal oxide material.

Mono-disperse metal oxides are known in the art for use in applications such as ceramics, catalysts, catalyst carriers, pigments, abrasives, coatings, fillers.

Methods of preparing mono-disperse metal oxides are known in the art. For instance, an article entitled "Mono-disperse Metal (Hydrous) Oxides-A Fascinating Field of Colloid Science" by Egon Matijevic appearing in Acc. Chem. Res. 1981, 14-22 describes various processes for producing mono-disperse metal oxides. Of four such methods outlined by Matijevic, one method describes forced hydrolysis wherein acidified solutions of metal salts are maintained undisturbed at elevated temperatures for a definite period of time to generate uniform particles of different metal oxides. In such instances, conditions such as salt concentration, pH, nature of the anion, temperature and so forth, were very restrictive and critical.

Barringer and Bowen described, in an article entitled "Formation, Packing, and Sintering of Mono-disperse $TiO_2$ Powders" appearing in Communications of the American Ceramic Society, December 1982, pages C-199-201, a process wherein titania powders are prepared by the controlled hydrolysis of a dilute alcoholic solution of a titanium alkoxide compound. In the process disclosed, the alkoxide is dissolved in an appropriate alcohol. Water was dissolved in a separate portion of alcohol and the two solutions were mixed using a magnetic stirrer. The hydrated $TiO_2$ was precipitated at room temperature. In the above process, the $TiO_2$ powders are sized before and after drying in order to remove agglomerates or large size particles either before or after the preparation. Thereafter, the powder is vacuum dried at 160°C and sintered in air at 800°C.

Other material having some relevance to the instant invention are: Fegley, White and Bowen, "Preparation of Zirconia-Alumina Powders by Zirconium Alkoxide Hydrolysis" appearing in Communications of the American Ceramic Society, February 1985, C-60 to C-62; and "Aluminum Hydrous Oxide Sols" by Catone and Matijevic appearing in Journal of Colloid and Interface Science, Vol.48, No. 2, August 1974, pages 291-301. In all of the above described processes for producing the mono-disperse metal oxides the process has necessitated the sizing of the oxide either both before and after drying and the recovery of the product has been accomplished by drying in air.

It is the object of the present invention to obtain a mono-disperse metal oxide by a process wherein the uniform size and shape of the material is obtained without sizing and the drying is accomplished in a manner so as to obviate any need for further sizing subsequent to the recovery of the product.

The invention comprises the hydrolysis of an alkoxide in alcohol, at a temperature and pH necessary to produce a sol (colloid) which can be supercritically treated with adequate agitation to remove the solvent and produce a mono-disperse metal oxides. In the disclosed process, the pH of the sol should be such as to prevent "precipitation" (a formation of varying sizes of particles) of the oxide particles.

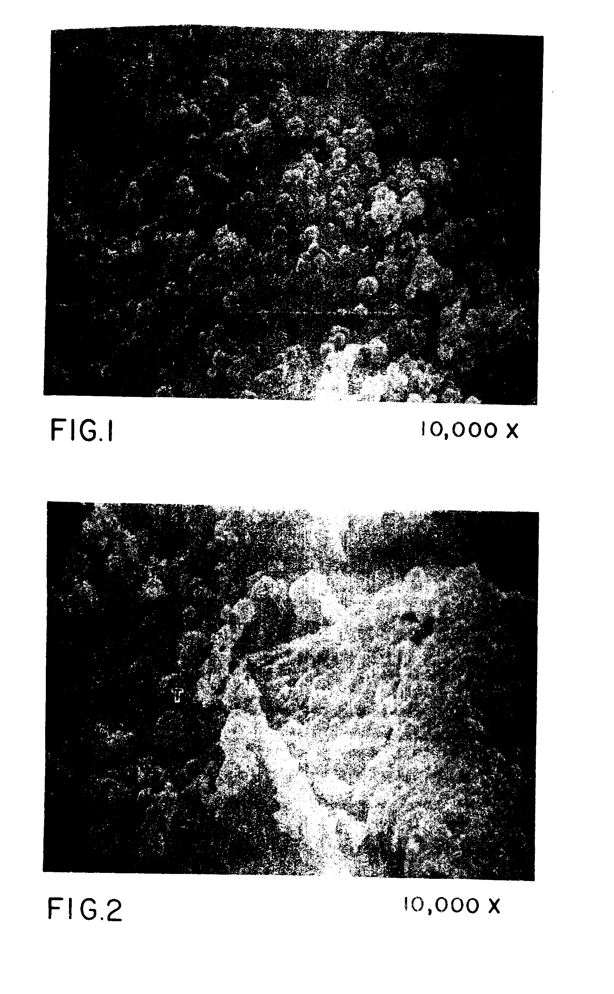

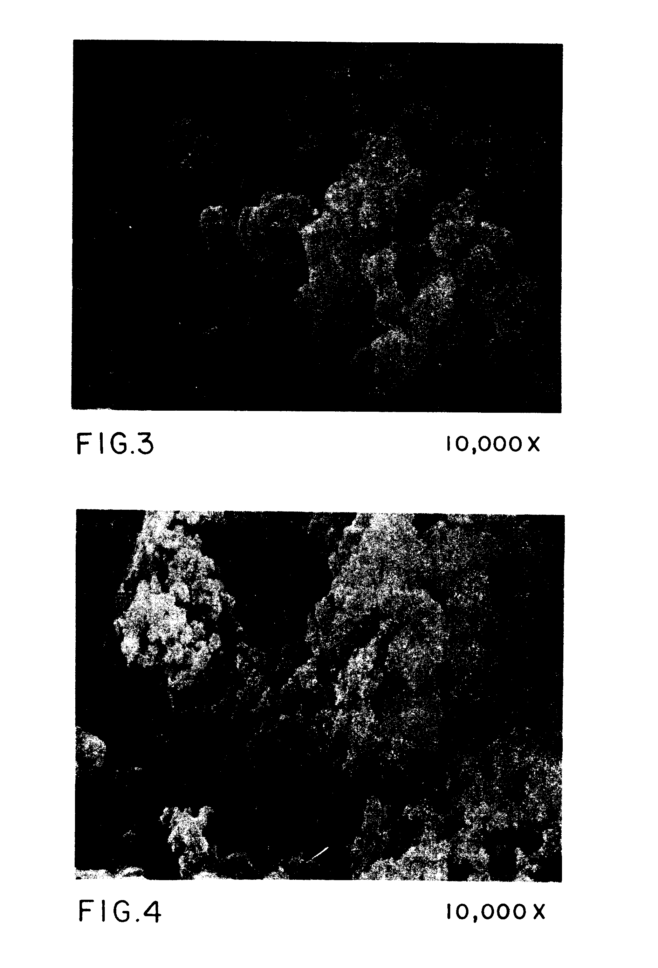

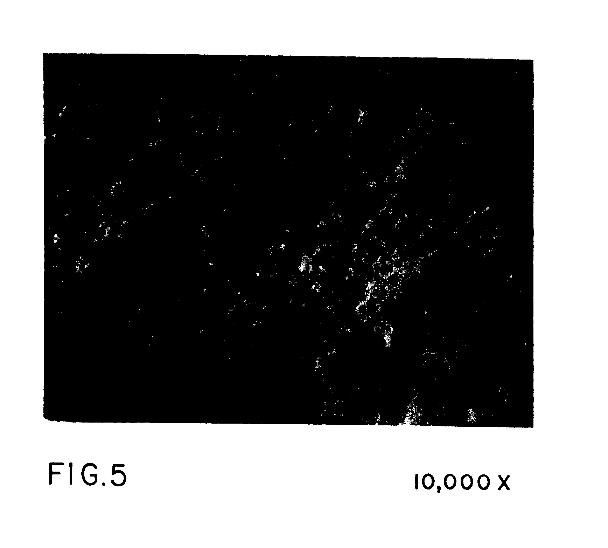

Referring to the accompanying illustrative diagrams, Figures 1, 2, 3, 4, and 5 are Scanning Electron Micrographs (SEM) of the product obtained in the process described in Experiments 1, 2, 3, 4, and 5, respectively.

The instant invention is directed to obtaining substantially inorganic oxide mono-disperse particles and primarily metal oxide corresponding to metals of Groups IIA&B, IIIA&B, IVA&B, VA&B, VIA&B, VIIB and Group VIII of the Periodic Table of Elements appearing on page 662 in the Condensed Chemical Dictionary, Ninth Edition (1977) Van Nostrand Reinhold and oxides which are combinations of such inorganic oxides.

In the preparation of mono-disperse metal oxides, which are known for use in numerous applications as ceramics, catalysts, catalyst carriers, pigments, coatings, fillers, abrasives and the like, a sol is treated with a supercritical fluid to produce the product. The term "sol" or "colloid" as used herein are each defined as a dispersion wherein the dispersed phase is not combined with the continuous phase to produce a gel.

The invention's starting material is comprised of one or more inorganic metal alkoxides, or metal salts (hereinafter the term "inorganic alkoxides" covers salts unless otherwise specified) which are dissolved in a solvent and hydrolyzed by means of water, optionally with an added catalyst (acid or base), to produce the sol and then the sol-suspending agent is extracted from the sample, for example, with a fluid above the critical temperature and pressure of the fluid to produce mono-disperse metal oxides. For instance, mono-disperse metal oxides such as $TiO_2/SiO_2$; $Al_2O_3/SiO_2$; $SiO_2$; $ZnO$; $ZnO/SiO_2$ and $ZrO_2/SiO_2$ can be produced using the method disclosed herein. In the practice of the invention one or more metal alkoxides or inorganic salts thereof may be used as the starting material for preparing the sol. It is, however, preferred to utilize metal alkoxides such as:

Mono-disperse Silica

Generally, $C_1$-$C_5$ alkoxides such as tetramethyl silicate and tetraethyl silicates, and $SiCl_4$.

Mono-disperse Zinc

Generally $C_1$-$C_5$ alkoxides as for instance di-isopropyl zinc and chloride salts.

Mono-disperse Zirconia-silica

Generally $C_1$-$C_5$ alkoxides such as tetra-isopropoxy zirconium, tetra sec-butoxy zirconium, tetraethoxy zirconium; tetramethyl silicate, tetraethyl silicate.

## Mono-disperse Alumina-silica
$C_1$-$C_5$ alkoxides.

## Mono-disperse Titania-silica
$C_1$-$C_5$ alkoxides.

## Mono-disperse Alumina aerogels
$C_1$-$C_5$ alkoxides, and chloride salts of aluminum.

The criteria for the starting material are metal alkoxides or inorganic metal salts which will dissolve in the specified solvent. Preparation of metal alkoxides is disclosed in Metal Alkoxides by Bradley, Mehrotra and Gaur, Academic Press (1978) incorporated herein by reference. This starting material is dissolved in an organic solvent, preferably an alcohol or alcohol-aromatic mixture and most desirably a $C_1$-$C_5$ alcohol or isomer thereof and toluene-butanol or toluene-isopropanol mixtures. In the practice of the invention it is preferable to utilize an alcohol which corresponds to the alcohol of the metal alkoxide being dissolved. Group IIA and IIB metals tend to form polymeric alkoxides which are insoluble in alcohols after isolation. In such instances it may be necessary to prepare the alkoxide in-situ with the alcohol or using only an aromatic solvent.

The preparation of the sol comprises the hydrolysis of an alkoxide in the presence of a solvent and a catalyst. The reaction conditions for preparing the sol must be strictly adhered to in order to achieve the desired substantially mono-disperse powder. By the term "mono-disperse" is meant sub-micron, substantially spherical and equisized particles. In the process of preparing the metal oxides, a metal alkoxide is hydrolyzed in the presence of a suitable solvent and a catalyst to produce the sol.

In the preparation of the mono-disperse metal oxide, the materials are mixed and preferably allowed to age for a time sufficient to complete the hydrolysis reaction to the sol without "precipitation" of the oxide particles. Ageing is not a requirement of the process. The catalyst utilized in the process can either be an acid or base depending on the specific type of metal oxide being prepared. Generally, the use of the acid or base depends on the required pH for maintaining the sol.

The solvent utilized in the process should be a solvent for the inorganic alkoxide or alkoxides which are utilized; should be miscible in water and, optionally, the added hydrolysis catalyst; and should be soluble in the supercritical fluid.

The solvent which is used in the process of the invention is preferably that which corresponds to the specific alkoxide being treated. After preparation of the sol the solvent is removed by treatment with a supercritical fluid, preferably $CO_2$. The temperature at which the sol is prepared and extracted and the pH of the sol during the preparation and extraction as well as the amount of agitation applied are all critical parameters for obtaining mono-disperse metal oxide particles. These critical parameters can all be ascertained without undue experimentation for the preparation of the various metal oxides which are within the scope of the invention. Although the temperature and amount of agitation required (based on reactor volume) for the process is standard for all the various metal oxides that are within the scope of the invention, the pH varies with the specific oxide being prepared. However, as indicated above, the necessary pH for preparing the various metal oxide sols can be ascertained without undue experimentation. It is a function of the isoelectric point of the metal. In the preparation of a sol, unlike the preparation of a gel, the pH of the sol is above the isoelectric point of the metal. As a result, the sol particles are charged thereby lowering the potential for agglomeration to occur between the particles. The pH range for the preparation of silica, for instance, is from about 8.3 to about 10.0 with a pH of 9.3 being preferred. Similarly, the pH for preparing the titania sol ranges from about 7.5 to about 9.0.

The water added in the process should be sufficient to at least liberate the alkoxy groups from the alkoxide. Adding excess (over stoichiometric) amounts of water will accomplish the above.

The added amount of water should be sufficient to enable complete hydrolysis to take place. It is preferable to use deionized water in the practice of the invention to reduce the ion content in the formed sol. In certain applications, for instance wherein the sol is prepared for use as a catalyst or catalyst support, deionized water should be used in preparing the sol. The stoichiometrically requisite water amount may simply be calculated from the formula of the hydrolysis reaction. In general, the amount of water added should be from 1 to 10 times the stoichiometrically requisite amount, preferably from 1 to 5 times the stoichiometric amount. Too great an excess of water, however, can cause rapid hydrolysis thus resulting in precipitation of the sol. Further, an over-excess is undesirable since such an excess may not be extracted by treatment with the supercritical fluid. The desirable amount of excess will also vary with the specific sol being produced.

The acids or bases are utilized not only as a catalyst to drive the reaction to the formation of the oxide product but also to provide the necessary surface charge (pH) on the particles to prevent agglomeration. The sol of the invention can be prepared in acidic, neutral or basic medium generally depending on the acidity or basicity of the metal oxide formed.

Any organic or inorganic acid or base can be utilized for obtaining the acceptable pH, as for instance, HCl, HF, acetic acid, $NH_3$, diethylamine, $HNO_3$ and $H_2SO_4$, and $NH_4OH$, all of which are suitable for use in practicing the invention. Certain acids or bases may, however, be more desirable for preparing specific metal oxides in the process of the invention. It is well within the knowledge of one skilled in the art to determine the more favorable conditions for producing the desired sol without undue experimentation.

The hydrolysis of the alkoxide, or metal salt is generally conducted at room temperature. However, the hydrolysis can occur at temperatures of from about -20°C to about the boiling point of the solvent and preferably at temperatures of from about 20°C to about 30°C. Conducting the reaction at higher than preferable temperatures, or closer to or at the boiling point of the solvent, result in a tendency of the crystallites to grow bigger and agglomerate. In order to overcome this possibility, the pH of the sol should be adjusted to further increase the charge on the individual particles. In such instances a pH higher than the suggested range may be required.

Generally in the process of the invention, the concentration of the inorganic alkoxide or metal salt should be from about 0.05% to about 75% (based on the total volume of the reactants utilized) desirably 0.1% to 25%. Preferably the concentration should be from about 0.1% to about 10%. At lower concentrations formation of sol is possible but extended processing time to remove to alcohol/solvent would be required. At higher concentrations intimate contact of the gel solids cause agglomeration of the particles.

Hydrolysis can be conducted with cooling of the components where necessary either prior to or during the reaction proper, however, this is not critical.

In the practice of the invention the various components (inorganic metal salt or alkoxide, water and optionally the catalytic amount of the acid or base) are charged to a reaction vessel in varying sequence dependent on the specific metal oxide being produced. Generally, the alkoxide, or metal salt thereof is initially dissolved in the mixture comprised of the solvent, water and acid or base. In most situations, however, it may be more desirous to slowly dissolve the alkoxide, or metal salt in the solvent prior to adding water and the specified amount of acid or base to form the colloidal material. As previously indicated, the structure of the sol can be altered by adjusting the pH of the solution.

The treatment of the sol to recover the oxide constitutes the second major step.

The solvent ladened sol which is formed in the practice of the invention is placed in an autoclave, for instance, where it is contacted with a fluid above its critical temperature and pressure by allowing the supercritical fluid to flow through the material (solid and liquid) until the solvent is no longer being extracted by the supercritical fluid.

In performing the invention, various fluids or mixtures thereof can be utilized at or above their critical temperature. For instance, fluorochlorocarbons typified by Freon® brand fluorochloromethanes and ethanes, ammonia, sulfur dioxide, nitrogen oxide, methane, ethane, propane, butane, ethylene, propylene and the like and carbon dioxide, are all suitable for use in practicing the invention, typically gases at atmospheric conditions, i.e., room temperature and pressure are used. Carbon dioxide is the preferred fluid for the invention. The criteria for the extraction fluid is that it be inert to the metal oxide, dissolve the solvent being removed and preferably have a low critical temperature, pressure, and toxicity. It should preferably be nonflammable. It is preferred that the critical temperature and pressure of the extraction fluids be below that of the solvent being extracted. In addition to drying the metal oxide, the temperature during extraction (generally at from about 70° to about 80°C when

$CO_2$ is used as the extraction fluid) is used to force the hydrolysis thereby leaving few alkoxy groups after extraction.

During the extraction process in the autoclave the extraction fluid is constantly being recovered and replaced by clean fluid. The clean fluid can be fresh extraction fluid or recycled extraction fluid which has been treated to remove contaminants. The recovered fluid can be visually checked to determine whether the extraction process has been completed by allowing some of the exiting fluid to escape. If condensation occurs (alcohol) it indicates the need for further extraction. Therefore, the extraction process has not been completed. After extraction is completed, optionally the solid is then further contacted with the fluid above the critical temperature and pressure for an additional period of time to insure complete removal of alcohol and substantially all water (only surface water remaining) after which the rate of depressurization of the autoclave is preferentially maintained to keep the temperature at or above the critical temperature of the extraction fluid.

In the process of extracting the solvent it is required that the sol be kept agitated or stirred sufficiently to allow the sol particles to remain in suspension without becoming entrained in the extracted solvent.

Agitation is required during the entire extraction period. Any form of agitation can be utilized including sonic or other vibratory means, stirring and the like. The rate of agitation should be such to allow the metal oxide particles to be in suspension at all times during the extraction. However, agitation should not be so vigorous as to entrain and carry over the metal oxides from the autoclave. In the case of a 2-liter autoclave, a stirring rate of 40-70 rpm was found to be generally sufficient to maintain these requirements. The amount of agitation required will be a function of the reactor vessel geometry and can be determined without undue experimentation.

The extraction process, therefore, is conducted with agitation, at a specific pH and temperature which insures the production of mono-disperse metal oxides.

The temperature during the extraction of the solvent must, of course, remain above the critical temperature of the fluid ($T = T_r T_c$ where $T_r$ is the reduced temperature), generally at $T = 1.0\text{-}2.0\ T_c$ and preferably at $T = 1.0\text{-}1.5\ T_c$ which is the minimum heat requirement that should be maintained. $T_r$ (1.0-1.5) is the reduced temperature expressed as the absolute temperature over the critical temperature.

In some instances it may be necessary to wash the sol or colloid prior to treatment in the autoclave. The washing is generally necessary to remove free ions when the starting material is a metal salt. The washing also can be considered a solvent exchange where the solvent is exchanged for the water. In such instances the washing solvent must be soluble in the supercritical fluid at conditions near or above the critical temperature and pressure of the fluid.

The metal oxide after completion of the extraction process is optionally dried at a temperature of from about 80°C to about 100°C to remove surface water from the final product since the extraction process may not remove all the free water present. The metal oxides which are obtained after extraction in general comprise the amorphous sub micron, spherical inorganic oxide particles having a particle size ranging from about 0.05 micron to 1 micron and generally from about 0.2 micron to about 0.4 micron.

The following Experiments more clearly delineate the embodiments of the invention. As is noted from the SEM photographs, the preferred results were obtained in Experiment I.

Each Experiment (except for Experiment I) varies certain parameters which are either outside the scope of the invention or broadly within the invention. For instance, Figure 1 represents a product derived from Experiment I which is an embodiment of the invention. In Experiment II (Figure II), the pH was outside the range specified for preparing a silica mono-disperse product and the process was conducted without agitation. Experiments III (Figure III) and IV (Figure IV) were conducted at a lower than specified pH. In Experiment V (Figure V), the sol was prepared at the upper end of the allowed temperature range and no adjustment to pH was made to accomodate the higher temperatures.

### EXPERIMENT I

To 239 ml ethanol, 83.5 ml tetra-ethyl orthosilicate (Silbond® condensed), and 40.5 ml deionized $H_2O$ was added 5 ml of ammonium hydroxide (28% aqueous) in a beaker with stirring. The pH was adjusted to 9.5 using the ammonium hydroxide. The liquid was then aged for 24 hours and charged to an autoclave at a weight of 285.9 grams. Extraction of the solvent (ethanol) was under the conditions of 4200 psig (294 Kg/sq.cm) of pressure and 70°C temperature and at a flow rate of $CO_2$ of 1.5 lbs. (0.68 kgs) per hour. Agitation was at about a rate of 58 rpm during extraction. Analysis ($N_2$ multipoint BET) showed a surface area of 12.3 $m^2/g$ and a pore volume of 0.56 cc/g by mercury intrusion.

The refractive index was measured to be 1.422 at 20°C. Particle size was 0.2-0.3 microns with few agglomerates evidenced. No pores were obtained with diameter of less than 0.035 micron. This is indicative that the metal oxide particles are hard spheres.

### EXPERIMENT II

To 239 ml of ethanol was added 83.5 ml Silbond® condensed, a brand of ethyl silicate, 40.5 ml deionized water and 6.1 ml of ammonium hydroxide in a beaker to obtain a pH of 11. The mixture was charged to an autoclave at a weight of 307.9 grams. The gel was aged at 4500 psig (under $CO_2$) pressure and 70°C temperature for about 1 hour without any flow of carbon dioxide. After the ageing the solvent was extracted without stirring using supercritical $CO_2$ at about 4000 psig (280 Kg/cm.sq.) pressure and 70°C temperature at a flow rate of $CO_2$ of 1.5 lbs. (0.68 kgs) per hour.

Analysis ($N_2$ BET) gave a surface area of 13.7 $m^2/g$ and a pore volume of 1.31 cc/g for pores of 100 to 0.017 microns by Hg intrusion. This product showed agglomeration due to a high pH and the lack of agitation even though the basic particles were about 0.2-0.3 microns.

### EXPERIMENT III

To 239 ml of alcohol was added 83.5 ml of ethyl silicate (Silbond® condensed) and 40.5 ml deionized water was added sufficient ammonium hydroxide (about 1/2 ml) with stirring to bring the pH to pH 8. The gel was prepared at room temperature. The gel was aged under a pressure ($CO_2$) of about 4500 psig (315 Kg/cm.sq.) and a temperature of 70°C for about 3 hours. After ageing the sample was dried by supercritical extraction using $CO_2$ at 4000 psig (280 Kg/cm.sq.) of pressure and 70°C temperature and at a flow rate of 1.5 lbs. of $CO_2$ per hour using a stirrer (same as I). The surface area of the product was 3.0 $m^2/g$ and the pore volume 0.60 cc/g. for pore sizes from 100 to 0.06 microns. Significant chaining of the sol was evidenced indicating tendency to polymerize at lower pH.

### EXPERIMENT IV

A gel was prepared in accordance with the procedure utilized in the above experiment and was aged for 3 days at room temperature. The pH at the time of extraction was determined to be 6.4. Originally the pH was 8.0. The extraction conditions utilized were 4000 psig (280 Kg/cm.sq.) pressure at 70° temperature and a flow rate of $CO_2$ of 1.5 lbs. per hour without stirring. Agglomeration as well as chaining evidenced.

### EXPERIMENT V

To 239 ml of ethanol at 60°C was added 83.5 ml of tetra-ethyl orthosilicate, 40.5 ml $H_2O$ (deionized) and 5 ml of ammonium hydroxide with stirring to obtain a pH of 9.5. The sample was aged for 2 days under atmospheric conditions. The solvent was extracted with stirring with supercritical $CO_2$ at a pressure of 4500 psig (294 Kg/cm.sq.) at 70°C and at a flow rate of $CO_2$ of 1.5 lbs. per hour. The surface area of the product was 133 $m^2/g$ and the pore volume was 0.95 cc/g. for pore sizes from 120 to 0.12 microns. Significant amounts of pores were evidenced, a condition similar to an aerogel particle. The primary particle size obtained was 0.01-0.05 microns. The higher temperature at which the sol was prepared combined with a pH at the lower end of the pH range for preparing silicon oxide, resulted in enhanced polymerization and increased agglomeration.

### Claims

1. A process for the preparation of a mono-disperse metal oxide material characterised in that it comprises hydrolysing an alkoxide in the presence of a solvent at a temperature and pH necessary to produce a sol and super-critically treating the sol with an extraction fluid and adequate agitation to produce a mono-disperse metal oxide.

2. A process as claimed in claim 1 wherein the mono-disperse metal oxide comprises at least one metal oxide corresponding to metals of Groups IIA&B, IIIA&B, IVA&B, VA&B, VIA&B, VIIB and Group VIII of the Periodic Table of Elements.

3. A process as claimed in claim 2 wherein the metal oxide comprises two or more metals of the listed group.

4. A process as claimed in any of claims 1 to 3 wherein the metal oxide is silica or titania.

5. A process as claimed in any of claims 1 to 4 wherein a catalyst is used which is an acid or a base.

6. A process as claimed in any of claims 1 to 5 wherein the solvent utilized is an alcohol.

7. A process as claimed in any of claims 1 to 5 wherein the solvent utilized is an alcohol-aromatic mixture.

8. A process as claimed in claim 7 wherein the solvent is a toluene-butanol mixture.

9. A process as claimed in any of claims 1 to 8 wherein the temperature during preparation of the sol ranges from -20°C to the boiling point of the solvent.

10. A process as claimed in claim 9 wherein the temperature ranges from 20 to 30°C.

0225785

FIG.1                    10,000 X

FIG.2                    10,000 X

0225785

FIG.3                    10,000 X

FIG.4                    10,000 X

0225785

FIG.5                    10,000 X